# EUROPÄISCHE PATENTANMELDUNG

(11) **EP 1 952 683 A1**
(43) Veröffentlichungstag der Anmeldung: **06.08.2008**
(21) Anmeldenummer: 08001672.8
(22) Anmeldetag: 30.01.2008
(51) Int. Cl.: A01B 59/06, A01D 41/14

(54) **Landwirtschaftliche Vorrichtung mit einer Querpendelzentrierung**

(30) Priorität: 31.01.2007 DE 102007005596
(71) Anmelder: CLAAS Saulgau GmbH, 88348 Bad Saulgau (DE)
(72) Erfinder: Albinger, Bernd, 88454 Hochdorf (DE); Klotz, Manfred, 88605 Sauldorf-Bietingen (DE)
(74) Vertreter: Roth, Klaus

(57) **Zusammenfassung**

Es wird eine Vorrichtung zum Bearbeiten eines landwirtschaftlichen Feldes und/oder von auf dem Feld angeordneten Pflanzen, insbesondere zur frontseitigen Anordnung an einem landwirtschaftlichen Fahrzeug (1), wobei wenigstens ein Arbeitselement (24) zum Bearbeiten des Feldes und/oder der Pflanzen an einer Trageinheit (4) angeordnet ist, wobei die Trageinheit (4) relativ zu einer Tragvorrichtung (3) um eine Drehachse (6) aus einer Ruhestellung in zwei entgegengesetzte Richtungen in zwei Pendelstellungen verschwenkbar ist, wobei wenigstens eine mindestens ein in eine Verstellrichtung längenveränderbares Federelement (7) umfassende Rückstelleinheit (5) zum Rückstellen der Trageinheit (4) aus der Pendelstellung in die Ruhestellung vorgesehen ist und wobei an einem ersten Ende des Federelementes (7) ein erstes Halteelement. (9) zum Halten an der Trageinheit (4) und an einem zweiten Ende des Federelementes (7) ein zweites Halteelement (8) zum Halten an der Tragvorrichtung (3) angeordnet ist, vorgeschlagen, die ohne großen Aufwand realisierbar ist und eine hohe Betriebssicherheit aufweist. Dies wird erfindungsgemäß dadurch erreicht, dass wenigstens eine Vorspannvorrichtung (5) zum Erzeugen einer in der Ruhestellung auf die Trageinheit (4) wirkenden Vorspannkraft vorgesehen ist.

## Beschreibung

Die Erfindung betrifft eine Vorrichtung zum Bearbeiten eines landwirtschaftlichen Feldes und/oder von auf dem Feld angeordneten Pflanzen, insbesondere zur frontseitigen Anordnung an einem landwirtschaftlichen Fahrzeug, nach dem Oberbegriff des Anspruchs 1.

Um die Bearbeitung landwirtschaftlicher Flächen möglichst ökonomisch und zügig durchzuführen, ist es wünschenswert, dass die Arbeitsgeräte eine möglichst große Arbeitsbreite aufweisen. Dementsprechend werden in den letzten Jahren die Arbeitsbreiten von entsprechenden Arbeitsgeräten bzw. Erntevorsätzen oder dergleichen immer größer, beispielsweise bei Maiserntern, Feldhäcksler für' Mais oder Biomassepflanzen, bei sogenannten "Pick-Up", bei (Großflächen-) Mähwerken, Mähdreschern etc..

Allerdings führt eine immer größer werdende Arbeitsbreite dazu, dass bei starrer Anordnung des Arbeitsgerätes am Zugfahrzeug Bodenunebenheiten nicht mehr bzw. nicht mehr vollständig ausgleichbar sind.

Dementsprechend haben sich gerade bei großen Arbeitsgeräten sogenannte Querpendelzentrierungen bewährt, wobei dass Arbeitsgerät im Allgemeinen um eine in Fahrtrichtung gerichtete Drehachse pendeln kann, so dass Bodenunebenheiten durch Querverstellung des Arbeitsgerätes in Bezug zum Zugfahrzeug zumindest in einem gewissen Winkelbereich ausgleichbar sind.

Häufig weisen Arbeitsgeräte mit besonders großer Arbeitsbreite auch Arbeitsbereiche auf, die in Bezug zu benachbarten Arbeitsbereichen höhenverstellbar ausgebildet sind, insbesondere mittels einer sogenannten Schwinge, die um eine quer zur Fahrtrichtung gerichteten, insbesondere horizontalen Drehachse verdrehbar bzw. im Allgemeinen anhebar ist.

In der Praxis haben sich zwei unterschiedliche Systeme der Querpendelzentrierung bewährt. Einerseits die aktive Pendelung über Hydraulikzylinder, wobei Taster bzw. Sensoren meist an den Außenseiten des Vorsatzgerätes angebracht sind. Diese detektieren den Kontakt zum Boden und wandeln den Abstand in ein elektrisches Signal um. Eine Steuerung ist bestrebt, über das Betätigen eines Hydraulikzylinders, dieses Signal auf einen gewünschten Sollwert zu halten.

Nachteilig bei aktiven Pendelsystemen ist der vergleichsweise hohe steuerungstechnische Aufwand, was einerseits die Betriebssicherheit gefährdet und anderseits zu wirtschaftlich hohen Kosten führt.

Andererseits ist auch die sogenannte Passivpendelung bekannt, wobei während der Arbeitsphase ein materieller Kontakt des Vorsatzes zum Boden besteht, der zur Pendlung des Arbeitsgerätes um die entsprechende Drehachse führt. Vorteil bei passiven Pendelsystemen ist die völlig autonome Anpassung an das entsprechende Bodenprofil, ohne jeglichen steuerungstechnischen Aufwand.

Während bei der aktiven Pendelung die Neutralposition des Vorsatzes durch den Hydraulikzylinder erzielt wird, verwendet man bei der passiven Pendelung im Allgemeinen zwei Zugfedern, die den Vorsatz in der Mitte halten sollen. Da sich die Kräfte der Zugfedern jedoch in der neutralen Stellung aufheben, wird diese daher nur ungenau gehalten und durch kleinste Störungen wie z.B. leichte Hanglage oder aber ungleichmäßige Schmutzansammlungen etc. verlassen. Auch ist ein Fahren ohne Bodenkontakt nur bei verriegeltem Vorsatz empfehlenswert, da der Vorsatz sehr leicht ins Schwanken bzw. Schwingen gerät und dies einen wellenförmigen Schnitt erzeugt. Aufgrund dessen sind gerade bei passiven Pendelsystemen Fixierungen bzw. verriegelungsmechanismen vorhanden, um die Neutralstellung festzulegen.

Nachteilig hierbei ist jedoch, dass derartige Fixierungen bzw. verriegelungsmechanismen im Allgemeinen manuell gelöst werden müssen, was jedoch in der Praxis bedauerlicherweise immer wieder vergessen wird, wodurch zum Teil erhebliche Schäden am Gerät entstehen können.

Aufgabe der Erfindung ist es demgegenüber, eine Vorrichtung zum Bearbeiten eines landwirtschaftlichen Feldes und/oder von auf dem Feld angeordneten Pflanzen vorzuschlagen, die ohne großen Aufwand realisierbar ist und eine hohe Betriebssicherheit aufweist.

Diese Aufgabe wird, ausgehend von einer Vorrichtung der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass wenigstens eine Vorspannvorrichtung zum Erzeugen einer in der Ruhestellung auf die Trageinheit wirkenden Vorspannkraft vorgesehen ist. Durch Vorspannung der Trageinheit gemäß der Erfindung kann in vorteilhafter Weise auf aktive Betätigung, d.h. die Realisierung eines aktiven Systems im oben genannten Sinn, und/oder auf eine Fixierung bzw. Verriegelung der Verstellung verzichtet werden. Entsprechend reduziert sich hierdurch der konstruktive als auch der Handhabungsaufwand im Vergleich zu herkömmlichen, passiven Systemen deutlich. Weiterhin kann auf eine elektronische Steuerung der Rückstellung, wie bei aktiven Systemen üblich, verzichtet werden. All dies wirkt sich wirtschaftlich günstig bei der Umsetzung der Erfindung aus. Darüber hinaus wird auch sicher vermieden, dass durch gegebenenfalls vorkommendes Vergessen des Endriegelns bzw. Lösens der Fixierung, wie bei bisherigen passiven Systemen Schäden am Arbeitsgerät entstehen können.

Vorzugsweise ist die Rückstelleinheit als die Vorspannvorrichtung ausgebildet. Beispielsweise kann hierbei in der Ruhe- bzw. Neutralstellung das einzige Federelement in vorteilhafter Weise vorgespannt werden und die Drehung der Trageinheit um die Drehachse zur Verstellung des Spannelementes herangezogen werden. Hierdurch wird die Feder beim Verstellen.weiter gespannt, so dass eine Rückstellkraft in Richtung der Ruhestellung erzeugt wird. Da dies ausschließlich passiv erfolgen kann, kann auf eine elektronische Steuerung oder dergleichen verzichtet werden, was sich einerseits in einer Verringerung der Komplexität des Systems äußert und andererseits zu einer nahezu autonomen bzw. automatischen Anpassung an das Bodenrelief führt.

In einer besonderen Weiterbildung der Erfindung legt die Vorspannvorrichtung wenigstens den Abstand der beiden Enden des Federelementes in der Ruhestellung fest. Mit Hilfe einer derart vorteilhaften Vorspannvorrichtung kann der Abstand und somit die Vorspannkraft in vorteilhafter Weise festgelegt bzw. definiert werden, was beispielsweise zu einer Anpassung an das entsprechende Arbeitsgerät bzw. die landwirtschaftliche Bearbeitungsvorrichtung führt.

Vorteilhafterweise ist wenigstens ein erstes, zum Spannen des Federelementes ausgebildetes Spannelement relativ zum ersten oder zweiten Halteelement in der Verstellrichtung verstellbar. Mit Hilfe eines derartigen Spannelementes zum Spannen des Federelementes wird erreicht, dass die verstellung eines Endes des Federelementes von der Verstellung der Trageinheit bzw. eines der Halteelemente entkoppelbar ist. Hierdurch ergeben sich völlig neue Funktionalitäten und Konstruktionsvarianten zur Realisierung einer Rückstelleinheit gemäß der Erfindung bzw. einer sogenannten Querpendelzentrierung entsprechender landwirtschaftlicher Vorrichtungen.

Vorzugsweise ist wenigstens eine erste Führungsvorrichtung zum Führen des ersten Spannelementes entlang der Verstellrichtung vorgesehen. Hiermit wird die Verstellung bzw. der Verstellweg eindeutig festlegbar, was zu einer störungsfreien bzw. definierten Verstellung des Spannelementes führt.

Möglicherweise sind zwei Rückstelleinheiten mit jeweils einer Rückstellfeder bzw. einem Federelement und einem erfindungsgemäßen Spannelement vorgesehen, die entsprechend entgegengerichtete Verstellrichtungen aufweisen, um die in zwei entgegengesetzt ausschlagende Pendelbewegung der Trageinheit zu realisieren.

Vorteilhafterweise sind diese beiden separaten Rückstelleinheiten miteinander gekoppelt, insbesondere seriell miteinander gekoppelt. Beispielsweise ist ein Halteelement der ersten Rückstelleinheit mit einem entsprechenden Halteelement der zweiten Rückstelleinheit fest miteinander verbunden und das jeweilige andere Halteelement der beiden Rückstelleinheiten einerseits mit der Trageinheit und andererseits mit der Tragvorrichtung verbunden.

In einer vorteilhaften Variante der Erfindung ist wenigstens ein zweites, zum Spannen des Federelementes ausgebildetes Spannelement relativ zum ersten oder zweiten Halteelement in die Verstellrichtung verstellbar. Hierdurch wird erreicht, dass mittels einer einzigen Rückstelleinheit bzw. einer einzigen Rückstellfeder, d.h. einem Federelement, die beiden in entgegengesetzt gerichteten Verstellrichtungen bzw. Verstellmöglichkeiten der Trageinheit in Bezug zur Tragvorrichtung realisierbar sind. Das bedeutet, dass bei.. einer Verstellung in die erste Richtung das erste Spannelement und bei einer Verstellung in die entgegengesetzte bzw. zweite Richtung das zweite Spannelement gemäß der Erfindung verstellt wird.

Vorzugsweise ist wenigstens eine zweite Führungsvorrichtung zum Führen des zweiten Spannelementes entlang der Verstellrichtung vorgesehen. Damit wird auch das zweite Spannelement in vorteilhafter Weise sicher geführt, was die Betriebssicherheit bzw. die Funktionsfähigkeit der Rückstellvorrichtung entsprechend verbessert.

In einer bevorzugten Variante der Erfindung ist die erste und die zweite Führungsvorrichtung als eine einzige Führungseinheit ausgebildet. Hierdurch reduziert sich der konstruktive Aufwand durch die Doppelfunktion der entsprechenden Führungseinheit.

Vorteilhafterweise weisen die erste und/oder die zweite Führungsvorrichtung und/oder die Führungseinheit mindestens ein wenigstens teilweise im Inneren des Federelementes angeordnetes Innenführungselement und/oder ein wenigstens teilweise außen am Umfang des Federelementes angeordnetes Mantelführungselement auf. Ein entsprechendes Innenführungselement oder Mantelführungselement ist gerade bei Schraubenfedern besonders einfach an diesen anzuordnen, so dass das am Ende des Federelementes angeordnete Halteelement vorteilhaft an den beiden Führungselementen oder lediglich an einem der Beiden geführt werden kann. Beispielsweise ist das Mantelführungselement als Rohr ausgebildet.

Entsprechend kann auch das Innenführungselement als Rohr oder Stab etc. ausgebildet werden, wobei in vorteilhafter Weise der Außendurchmesser des Innenführungselementes wenigstens teilweise etwa dem Innendurchmesser der Schraubenfeder entspricht.

In einer bevorzugten Variante der Erfindung umfasst die Vorspannvorrichtung wenigstens die erste und/oder die zweite Führungsvorrichtung und/oder die Führungseinheit. Durch eine derartige Doppelfunktion der Vorspannvorrichtung bzw. Führungsvorrichtung verringert sich der konstruktive Aufwand.

Vorteilhafterweise ist das Federelement als Druckfeder ausgebildet. Es hat sich gezeigt, dass eine Vorrichtung gemäß der Erfindung gerade mittels einer Druckfeder konstruktiv besonders einfach realisierbar ist.

Vorzugsweise ist die Drehachse im Wesentlichen in Fahrtrichtung ausgerichtet und/oder im Wesentlichen im mittleren Bereich der Arbeitsbreite der Vorrichtung angeordnet. Hiermit wird eine vorteilhafte Querpendelung der Trageinheit in Bezug zur Tragvorrichtung bzw. dem entsprechenden Zugfahrzeug realisierbar.

Es hat sich in der Praxis gezeigt, dass die Erfindung gerade bei frontseitigem Anbau an ein Zugfahrzeug und/oder bei landwirtschaftlichen Fahrzeugen mit einer Häckselvorrichtung und/oder mit einer Dreschvorrichtung zum Ernten von Pflanzen bzw. Pflanzenteilen von besonderem Vorteil ist.

Ein Ausführungsbeispiel der Erfindung ist in der Zeichnung dargestellt und wird anhand der Figuren nachfolgend näher erläutert.

Im Einzelnen zeigt:
- Figur 1: eine schematische Darstellung einer landwirtschaftlichen Zugmaschine mit einem Vorsatzgerät mit Querpendelzentrierung gemäß der Erfindung,
- Figur 2: eine schematische, detaillierte Darstellung eines Ausschnitts des Arbeitsgerätes mit Querpendelzentrierung gemäß der Erfindung,
- Figur 3: eine schematische Schnittdarstellung durch eine Rückstelleinheit gemäß der Erfindung,
- Figur 4: eine schematische Draufsicht auf die Rückstelleinheit gemäß Figur 3,
- Figur 5: die schematisch dargestellte Rückstelleinheit gemäß der Erfindung in Ruhestellung,
- Figur 6: die schematisch dargestellte Rückstelleinheit gemäß Figur 5 in einer ersten Verstellposition und
- Figur 7: die schematisch dargestellte Rückstelleinheit gemäß Figur 5 in einer zweiten, entgegengesetzt gerichteten Verstellposition.

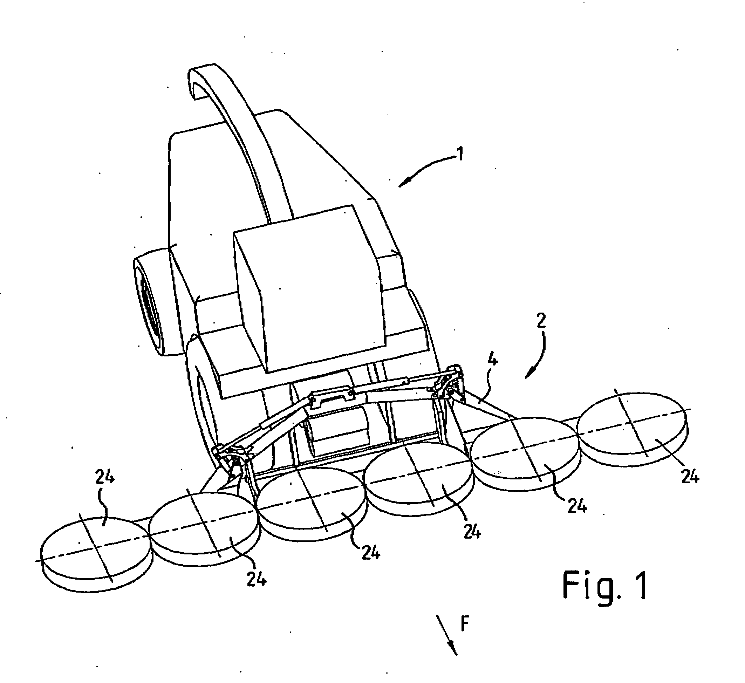

In Figur 1 ist schematisch eine Zugmaschine 1 mit einem Arbeitsgerät 2 abgebildet. Beim abgebildeten Fahrzeug handelt es sich z.B. um einen Feldhäcksler mit einem Maisvorsatzgerät mit mehreren Schneidscheiben 24.

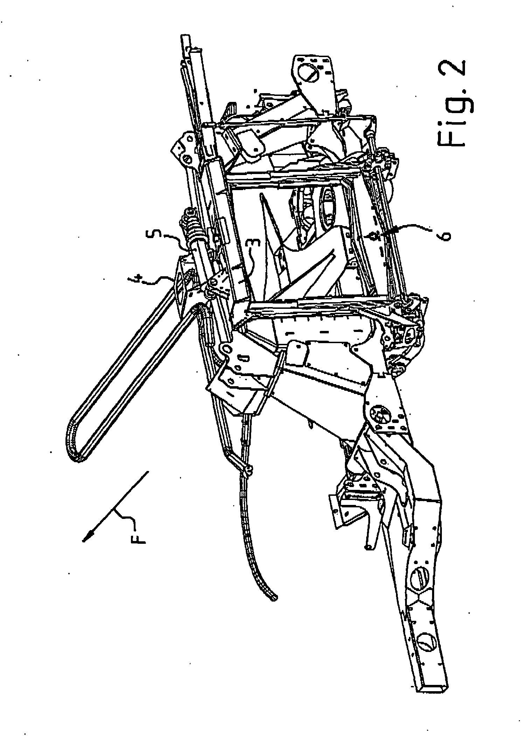

In Figur 2 ist schematisch ein Ausschnitt vom Arbeitsgerät 2 dargestellt, wobei die an die Zugmaschine zu koppelnde Tragvorrichtung 3 sowie eine um eine Drehachse 6 in zwei entgegengesetzte Richtungen pendelbare Trageinheit 4 ersichtlich ist. Dies bedeutet, dass die Tragvorrichtung 3 fest bzw. starr mit der Zugmaschine 1 verbunden wird und die Trageinheit 4 mit den jeweiligen Arbeitselementen 24 relativ zur Tragvorrichtung 3 um die Drehachse 6 pendeln kann. Entsprechend können Bodenunebenheiten zwischen den Arbeitselementen 24 des Arbeitsgerätes 2 und der Zugsmaschine 1 ausgeglichen werden.

In den Figuren 1 und 2 ist die Ruhe- bzw. Normalstellung des Arbeitsgerätes 2 für die Arbeitsphase abgebildet. Die Ruhe- bzw. Normalstellung des Arbeitsgerätes 2 wird durch eine Rückstelleinheit 5 festgelegt. Die Rückstelleinheit 5 bewirkt, dass in dem Fall, in dem die Trageinheit 4 entweder in die eine oder in die entsprechend entgegengerichtete Richtung verstellt wird, eine Rückstellkraft erzeugt wird, so dass das Arbeitsgerät 2 bzw. die Trageinheit 4 bestrebt ist, ohne Fremdeinwirkung bzw. Krafteinwirkung eines aktiven Betätigungselementes wie Hydraulikzylinder etc., wieder in die in Figur 2 dargestellte Normalstellung bzw. Ruhestellung zu gelangen.

Das dargestellte Rückstellsystem ist hierbei als passives Rückstellsystem bzw. als sogenannte passive Pendelung ausgebildet, so dass insbesondere mittels nicht näher dargestellter Kontaktelemente des Arbeitsgerätes 2 der materielle Kontakt zum Boden hergestellt wird und entsprechende Bodenunebenheiten über das Kontaktelement eine Pendel- bzw. Verstellkraft auf das Arbeitsgerät 2 ausüben. Bei den Kontaktelementen kann es sich in vorteilhafter Weise sowohl um Stützräder und/oder um Kontaktschlitten oder dergleichen handeln.

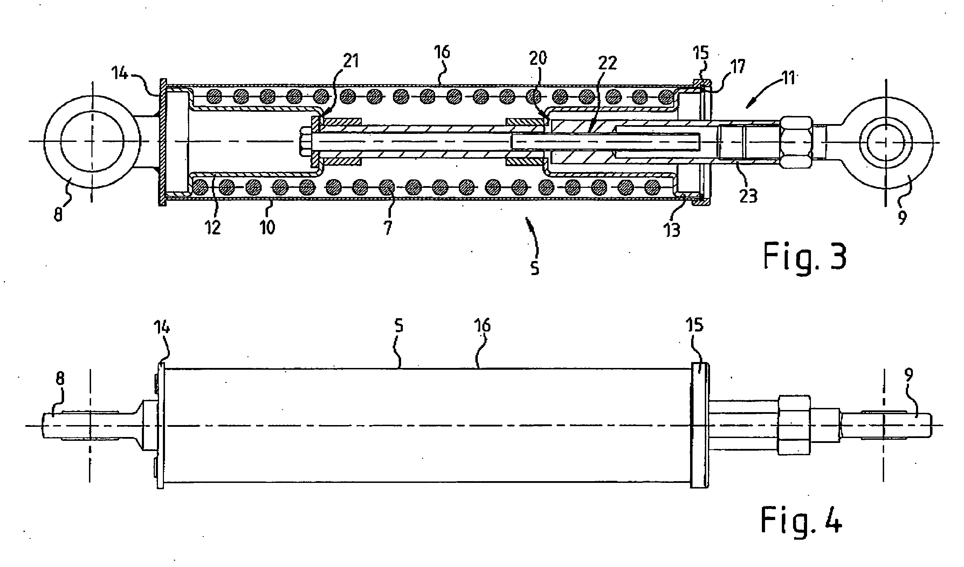

Die Ausbildung der Rückstelleinheit 5 gemäß der Erfindung ist in Figur 3 im Schnitt detaillierter abgebildet. Diese Rückstelleinheit 5 weist eine Druckfeder 7 auf, die gegen Endhülsen 12 und 13 drückt. In der abgebildeten Ruhestellung der Rückstelleinheit 5 stehen die Endhülsen 12, 13 an den entsprechenden Kopfstücken 14 bzw. 15 an. Das Kopfstück 14 ist hier als Scheibe ausgebildet und mit einer ersten Halteöse 8 fest verbunden. Das Kopfstück 15 ist hier als Ringelement ausgebildet, das in einer Nut einen Seegerring 17 oder dergleichen aufnimmt, der wiederum als Anschlag für'die Endhülse 13 dient.

Die dargestellte Ausbildung des Kopfstückes 15 ermöglicht mit Hilfe des Seegerrings 17 eine vorteilhafte Montage der Rückstelleinheit 5 bzw. der innerhalb des Rohres 16 angeordneten Komponenten.

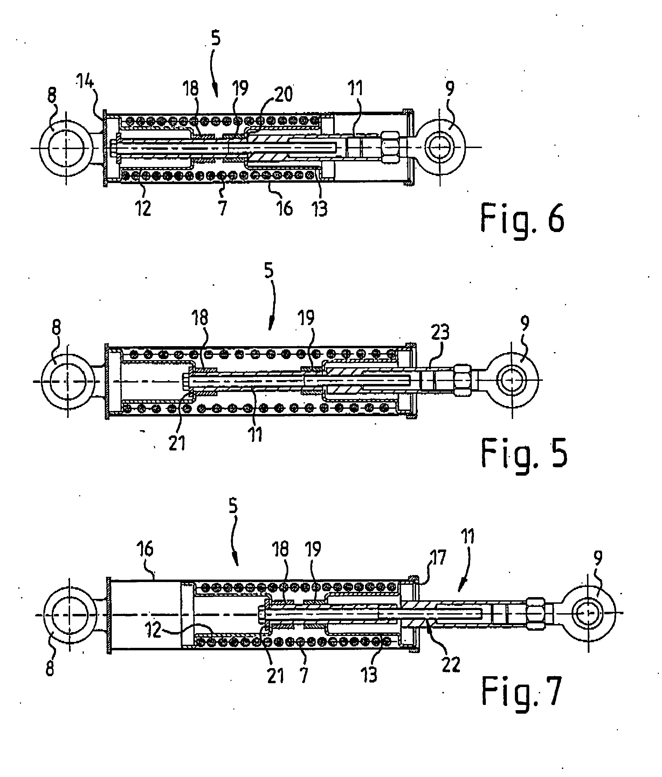

Die beiden Kopfstücke 14, 15 sind über ein Zylinderrohr 16 miteinander verbunden, wodurch der Abstand sowohl der beiden Kopfstücke 14, 15 als auch der beiden Endhülsen 12, 13 festgelegt ist. Durch diesen Abstand ist auch die Vorspannung der Feder 14 festgelegt und somit die Vorspannkraft, die auf eine zweite Halteöse 9 wirkt, wobei der Abstand der beiden Haltenösen 8, 9 für/durch die Pendelverstellung einerseits vergrößerbar (vgl. Figur 7) und andererseits verkleinerbar (vgl. Figur 6) ist. Die zweite Halteöse 9 ist über eine Stange 11 sowohl mit der Endhülse 12 als auch mit der Endhülse 13 in Wirkverbindung.

Zur Verdeutlichung der Funktionsweise der Rückstelleinheit 5 ist die Ruhestellung nochmals als Figur 5 zwischen den beiden im Wesentlichen maximal verstellbaren, entgegengesetzten Verstellpositionen gemäß Figur 6 und Figur 7 abgebildet.

Figur 7 zeigt die Pendelstellung in der die beiden Halteösen 8 bzw. 9 maximal bzw. weitgehend maximal voneinander beabstandet sind. Hier wird deutlich, dass mit Hilfe der Endhülse 12 die Feder 7 zusammengedrückt wird, wobei eine Scheibe als Anschlag 21 an der Endhülse 12 ansteht bzw. diese mitnimmt. Hierbei wird die Endhülse 12 entlang des Rohres 16 bzw. mittels der vorteilhaften Ausbildung der Stange 11 und entsprechenden Führungsabschnitten 18 bzw. 19 der Endhülsen 12 bzw. 13 sicher in Richtung der Längsachse bzw. in Richtung der Verstellrichtung geführt.

In der Pendelstellung gemäß Figur 7 ist die Endhülse 13 bzw. der Ring 17 als Anschlag für die Feder 7 ausgebildet, der die Federkraft aufnimmt und eine Zugbelastung der Halteöse 8 und des Rohres 16 erzeugt.

In der Pendelstellung gemäß Figur 6, die im Wesentlichen der Pendelstellung mit minimalen Abstand der beiden Halteösen 8 bzw. 9 entspricht, wird mittels der Stange 11 über einen Mitnehmer bzw. Anschlag 20 die Endhülse 13 in Richtung der Halteöse 8 verstellt, so dass die Feder zusammengedrückt wird. Hierbei wird die Druckkraft der Feder 7 über die Endhülse 12 auf das Kopfstück 14 bzw. die Haltehülse 8 übertragen.

Auch bei dieser Verstellung erfolgt eine Führung über das Rohr 16 bzw. die Führungsabschnitte 18, 19 entlang derer die Stange 11 und die Endhülse 13 geführt werden. Entsprechend werden zudem die Endhülsen 12, 13 an der Stange 11 geführt.

Vor allem aus den Figuren 6 und 7 im Vergleich zu Figur 5 wird deutlich, dass die Stange 11 verstellbar mit den beiden Endhülsen 12, 13 verbunden ist und für die Verstellung der beiden Endhülsen 12 bzw. 13 entsprechend zwei entgegengesetzt wirkende Anschläge 20, 21 bzw. Mitnehmer aufweist, die ein separates Mitnehmen der entsprechenden Endhülse 12, 13 in die jeweilige Verstellrichtung bewirken.

Entsprechend wird vor allem durch Figur 7 deutlich, dass die Verstellung der Halteöse 9 von der Endhülse 13 entkoppelt ist. Vor allem durch Figur 6 wird deutlich, dass die Verstellung der Halteöse 9 von der Endhülse 12 und zu einem geringen Teil (nämlich dem optional vorzusehenden bzw. im dargestellten Beispiel mittels einem Gewinde 22 einstellbaren Spiel zwischen dem Anschlag 20 und der Schulter der Endhülse 13) auch von der Endhülse 13 entkoppelt ist.

Grundsätzlich wird mit Hilfe der Rückstelleinheit 5 gemäß der Erfindung erreicht, dass die Ruhestellung gemäß Figur 5 bzw. 3 bereits in einem vorgespannten Zustand ist, der je nach Bedarf an das entsprechende Arbeitsgerät bzw. dessen Gewicht/Drehmoment angepasst werden kann. Hierzu ist insbesondere die Einstellung des Abstands der beiden Endhülsen 12, 13 und/oder die Auslegung der Feder 7 in entsprechend vorteilhafter Weise zu realisieren. Entsprechend weist die Feder 7 eine Länge im entspannten Zustand auf, die größer ist als die in Figur 5 abgebildete Länge bzw. länger als der Abstand der entsprechenden Schultern der beiden Endhülsen 12, 13.

Gemäß den Figuren 3 oder 5 wird ersichtlich, dass die Länge der Feder 7 und somit die Vorspannkraft, die auf die Halteösen 8, 9 wirkt, im Wesentlichen vom Abstand der beiden Kopfstücke 14 und 15 und somit von der Länge des Rohres 16 und der Schulterhöhe der Endstücke 12, 13 abhängt.

Allerdings kann mittels dem dargestellten Ausführungsbeispiel auch die Länge der Feder 7. und somit die Vorspannkraft, die auf die Halteösen 8, 9 wirkt, auch durch das Gewinde 22 bzw. durch Verkürzung des Abstandes des Anschlages 22 in Richtung Halteöse 8 verändert bzw. erhöht werden. Durch Einschrauben einer Mutter 23 der Stange 11 wird der Anschlag 20 gegen die Endhülse 13 gedrückt, wodurch der lichte Abstand zwischen den beiden Endstücken 12, 13 und somit die Länge der Feder 7 in der Ruhestellung verkürzt wird. Hierdurch wird die Vorspannkraft erhöht, die auf die beiden Halteösen 8, 9 in der Ruhestellung wirkt. Durch vorteilhafte Wahl der Feder 7 ist eine gewünschte Federkennlinie realisierbar, insbesondere eine Einstellung bzw. Anpassung der Vorspannkraft in Ruhestellung und eine Steigung bzw. Zunahme der Federkraft in Abhängigkeit des Verstellweges bzw. der Veränderung des Abstandes der beiden Halteösen 8, 9.

### Bezugszeichenliste:

- 1: Zugmaschine
- 2: Arbeitsgerät
- 3: Tragvorrichtung
- 4: Trageinheit
- 5: Rückstelleinheit
- 6: Drehachse
- 7: Feder
- 8: Halteöse
- 9: Halteöse
- 10: Zylinder
- 11: Stange
- 12: Endhülse
- 13: Endhülse
- 14: Kopfstück
- 15: Kopfstück
- 16: Rohr
- 17: Ring
- 18: Abschnitt
- 19: Abschnitt.
- 20: Anschlag
- 21: Anschlag
- 22: Gewinde
- 23: Mutter
- 24: Schneidscheibe

- F: Fahrtrichtung

## Patentansprüche

1. Vorrichtung zum Bearbeiten eines landwirtschaftlichen Feldes und/oder von auf dem Feld angeordneten Pflanzen, insbesondere zur frontseitigen Anordnung an einem landwirtschaftlichen Fahrzeug (1), wobei wenigstens ein Arbeitselement (24) zum Bearbeiten des Feldes und/oder der Pflanzen an einer Trageinheit (4) angeordnet ist, wobei die Trageinheit (4) relativ zu einer Tragvorrichtung (3) um eine Drehachse (6) aus einer Ruhestellung in zwei entgegengesetzte Richtungen in zwei Pendelstellungen verschwenkbar ist, wobei wenigstens eine mindestens ein in eine Verstellrichtung längenveränderbares Federelement (7) umfassende Rückstelleinheit (5) zum Rückstellen der Trageinheit (4) aus der Pendelstellung in die Ruhestellung vorgesehen ist und wobei an einem ersten Ende des Federelementes (7) ein erstes Halteelement (9) zum Halten an der Trageinheit (4) und an einem zweiten Ende des Federelementes (7) ein zweites Halteelement (8) zum Halten an der Tragvorrichtung (3) angeordnet ist, **dadurch gekennzeichnet, dass** wenigstens eine Vorspannvorrichtung (5) zum Erzeugen einer in der Ruhestellung auf die Trageinheit (4) wirkenden Vorspannkraft vorgesehen ist.

2. Vorrichtung nach Anspruch 1, **dadurch gekennzeichnet, dass** die Rückstelleinheit (5) als die Vorspannvorrichtung (5) ausgebildet ist.

3. Vorrichtung nach einem der vorgenannten Ansprüche, **dadurch gekennzeichnet, dass** die Vorspannvorrichtung (5) wenigstens den Abstand der beiden Enden des Federelementes' (7) in der Ruhestellung festlegt.

4. Vorrichtung nach einem der vorgenannten Ansprüche, **dadurch gekennzeichnet, dass** wenigstens ein erstes, zum Spannen des Federelementes (7) ausgebildetes Spannelement (12, 13) relativ zum ersten oder zweiten Halteelement (8, 9) in die Verstellrichtung verstellbar ist.

5. Vorrichtung nach einem der vorgenannten Ansprüche, **dadurch gekennzeichnet, dass** wenigstens eine erste Führungsvorrichtung (11, 16) zum Führen des ersten Spannelementes (12, 13) entlang der Verstellrichtung vorgesehen ist.

6. Vorrichtung nach einem der vorgenannten Ansprüche, **dadurch gekennzeichnet, dass** wenigstens ein zweites, zum Spannen des Federelementes (7) ausgebildetes Spannelement (12, 13) relativ zum ersten oder zweiten Halteelement (8, 9) in die Verstellrichtung verstellbar ist.

7. Vorrichtung nach einem der vorgenannten Ansprüche, **dadurch gekennzeichnet, dass** wenigstens eine zweite Führungsvorrichtung (11, 16) zum Führen des zweiten Spannelementes (12, 13) entlang der Verstellrichtung vorgesehen ist.

8. Vorrichtung nach einem der vorgenannten Ansprüche, **dadurch gekennzeichnet, dass** die erste und die zweite Führungsvorrichtung (11., 16) als eine einzige Führungseinheit (11, 16) ausgebildet ist.

9. Vorrichtung nach einem der vorgenannten Ansprüche, **dadurch gekennzeichnet, dass** die erste und/oder die zweite Führungsvorrichtung (11, 16) und/oder die Führungseinheit (11, 16) mindestens ein wenigstens teilweise im Innern des Federelementes (7) angeordnetes Innenführungselement (11) und/oder ein wenigstens teilweise außen am Umfang des Federelementes (7) angeordnetes Mantelführungselement (16) aufweisen.

10. Vorrichtung nach einem der vorgenannten Ansprüche, **dadurch gekennzeichnet, dass** die Vorspannvorrichtung (5) wenigstens die erste und/oder die zweite Führungsvorrichtung (11, 16) und/oder die Führungseinheit (11, 16) umfasst.

11. Vorrichtung nach einem der vorgenannten Ansprüche, **dadurch gekennzeichnet, dass** das Federelement (7) als Druckfeder (7) ausgebildet ist.

12. Vorrichtung nach einem der vorgenannten Ansprüche, **dadurch gekennzeichnet, dass** die Drehachse (6) im Wesentlichen in Fahrtrichtung (F) ausgerichtet und/oder im Wesentlichen im mittleren Bereich der Arbeitsbreite der Vorrichtung (2) angeordnet ist.

13. Landwirtschaftliches Fahrzeug (1), **dadurch gekennzeichnet, dass** es eine Vorrichtung (2) nach einem der vorgenannten Ansprüche aufweist.

14. Landwirtschaftliches Fahrzeug (1) nach dem vorgenannten Anspruch, **dadurch gekennzeichnet, dass** eine Häckselvorrichtung zum Häckseln der Pflanzen bzw. von Erntegut vorgesehen ist.

15. Landwirtschaftliches Fahrzeug (1) nach einem der vorgenannten Ansprüche, **dadurch gekennzeichnet, dass** eine Dreschvorrichtung zum Dreschen der Pflanzen bzw. von Erntegut vorgesehen ist.
